# EUROPÄISCHE PATENTSCHRIFT

(11) **EP 0 416 263 B1**
(45) Veröffentlichungstag und Bekanntmachung des Hinweises auf die Patenterteilung: **29.09.1993**
(21) Anmeldenummer: 90114327.1
(22) Anmeldetag: 26.07.1990
(51) Int. Cl.: B62D 6/00, B62D 117/00, B62D 121/00, B62D 101/00, B62D 131/00, B62D 5/04

(54) **Verfahren zum Betrieb eines Lenksystems mit einer Servounterstützung und Lenksystem mit einer Servounterstützung**
Method for the operation of a power assisted steering system and power assisted steering system
Procédé pour le commande d'un système de direction assistée et système de direction assistée

(30) Priorität: 02.09.1989 DE 3929177
(43) Veröffentlichungstag der Anmeldung: 13.03.1991
(73) Patentinhaber: ROBERT BOSCH GMBH, 70442 Stuttgart (DE)
(72) Erfinder: Schleuter, Willibert, Dr. Ing., D-7120 Bietigheim-Bissingen (DE); Bischof, Hubert, Dr. Ing., D-7143 Vaihingen/Enz (DE); Pesch, Michael, Dipl.-Ing., D-7141 Schwieberdingen (DE); Konigorski, Ulrich-Eugen, Dr. Ing., D-7520 Bruchsal (DE)

(56) Entgegenhaltungen:
- GB-A- 2 179 012
- GB-A- 2 206 321

## Beschreibung

Die Erfindung betifft ein Verfahren zum Betrieb eines Lenksystems mit einer Servounterstützung und ein Lenksystem mit einer Servounterstützung, insbesondere zur Verwendung in einem Kraftfahrzeug.

Es ist unter anderem im Kraftfahrzeugbau bekannt, die vom Fahrer des Fahrzeugs aufzubringenden Lenkkräfte durch elektrische, hydraulische und/oder pneumatische Stellglieder zu reduzieren.

In der GB,A,2,179,012 wird ein Lenksystem mit einer Servounterstützung beschrieben, bei dem aus der detektierten Lenkgeschwindigkeit und aus dem detektierten Lenkmoment festgestellt wird, ob sich das System in einem positiven Lenkzustand oder in einem Lenkrad-Rückführungszustand befindet. Der positive Lenkzustand ist hierbei als der Zustand definiert, bei dem das lenkbare Rad mit einer Lenkkraft gehandhabt wird, die größer ist, als dies zur Überwindung der auf die gelenkten Räder wirkenden Rückstellkraft. Überwiegen jedoch die Rückstellkräfte gegenüber den auf das Lenkrad wirkenden Lenkkräfte, so liegt bestimmungsgemäß der Lenkrad-Rückführungszustand vor. Das Ansteuersignal der Servounterstützung besteht dabei aus einem ersten Bestandteil, der abhängig von der Lenkgeschwindigkeit ist und einem zweiten Bestandteil dessen Größe davon abhängig ist, ob ein positiver Lenkzustand oder ein Lenkrad-Rückführungszustand festgestellt wird.

Die Erfindung ist durch die Merkmale der unabhängigen Ansprüche 1 und 8 gekennzeichnet. Weitere, die Erfindung in vorteilhafter Weise ausgestaltende Merkmale sind in den Unteransprüchen enthalten.

### Vorteile der Erfindung

Das erfindungsgemäße Verfahren mit den in Anspruch 1 genannten Merkmalen hat dem gegenüber den Vorteil, daß der Bedienungsperson der Servolenkung, dem Fahrer eines Kraftfahrzeugs, durch Ausnutzung der erweiterten Einstellmöglichkeiten ein besseres Gefühl für die am Rad wirkenden Lenkkräfte gegeben wird. Damit ist der Kontakt zwischen Rad und Straße besser spürbar.

Dies wird dadurch erreicht, daß die Dämpfung der Servolenkung in Abhängigkeit von der Betätigungsrichtung des Lenksystems variiert wird. Es wird also eine unterschiedliche Dämpfung vorgegeben, je nachdem ob der Fahrer über das Lenksystem die Räder bewegt oder ob die auf die Räder wirkenden Rückstellkräfte das Lenksystem antreiben.

Bevorzugt wird eine Ausführungsform des Verfahrens, bei dem die Betätigungsrichtung des Lenksystems aus dem Leistungsfluß innerhalb der Servolenkung bestimmt wird. Dieses Verfahren zeichnet sich dadurch aus, daß es besonders einfach realisierbar ist.

Vorzugsweise wird die Dämpfung der Servolenkung in Abhängigkeit von der Leistungsflußrichtung variiert. Beispielsweise können auf diese Weise die über die Räder auf das Lenksystem wirkenden Rückstellkräfte in ihrer Wirkung stark bedämpft werden, während vom Fahrer ausgeführte Lenkbewegungen gering gedämpft zum Rad übertragen werden. Umgekehrte oder gemischte Dämpfungsverhältnisse sind je nach Einstellwunsch ebenfalls realisierbar.

Besonders bevorzugt wird außerdem eine Ausführungsform des Verfahrens, bei der zur Beeinflussung der Dämpfung der Servolenkung beispielsweise die Geschwindigkeit, der Beladungszustand, die Giergeschwindigkeit, -beschleunigung und/oder andere Betriebsparameter des Fahrzeugs herangezogen werden. Dadurch ist eine optimale Anpassung der Dämpfung an die Lenkungsresonanzkurve in Abhängigkeit ihrer Einflußgrößen möglich.

Besonders bevorzugt wird schließlich eine Ausführungsform des Verfahrens, bei dem die Dämpfungseigenschaften bei einer von der Bedienungsperson der Lenkung hervorgerufenen Bewegung der Räder langsamer umgestellt werden als bei vom Untergrund auf das Lenksystem wirkenden Einflüssen, beispielsweise Stößen. Auf diese Weise läßt sich die sogennante Stößigkeit der Lenkung verbessern, sogar in Verbindung mit Zahnstangenlenkungen.

Weitere Vorteile und Ausführungsformen des Verfahrens ergeben sich aus den Unteransprüchen. Besonders vorteilhaft ist es, daß diese Art des Lenkungsdämpfung unabhängig von der technologischen Gestaltung des Stellorgans ist; es kann hydromechanisch, elektromechanisch und/oder pneumatisch realisiert sein. Überdies sind passive Lenkungsdämpfer meist nicht erforderlich.

### Zeichnung

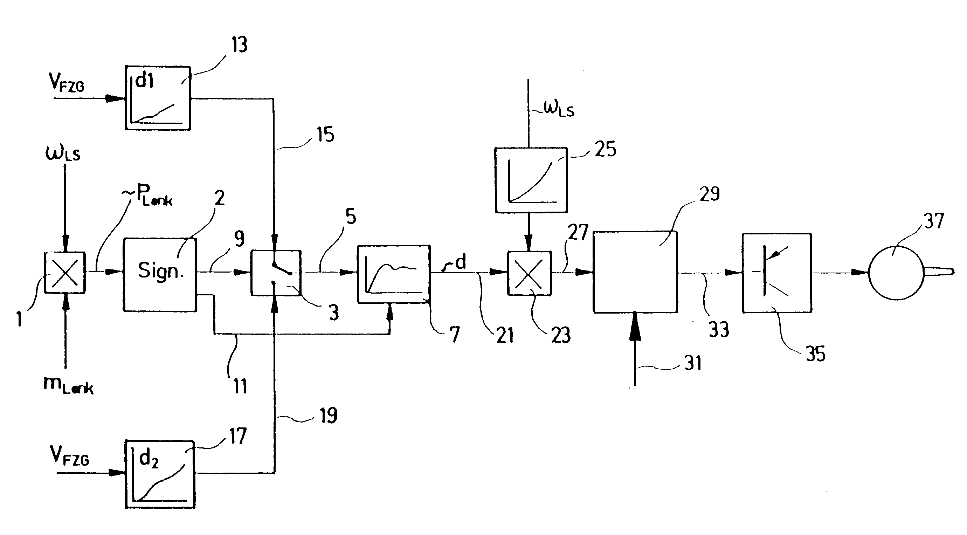

Die Erfindung wird im folgenden anhand der Figur näher erläutert. Diese zeigt ein Funktionsschaltbild, aus dem sich das Prinzip der leistungsflußrichtungsabhängigen Dämpfung ergibt.

Die Leistungsflußrichtung wird bei der dargestellten Ausführungsform des Verfahrens mit Hilfe eines ersten Signals m_{Lenk}, dem Lenkmoment, und eines zweiten Signals ω_{LS}, einem Signal, welches proportional zur Lenksäulendrehgeschwindigkeit ist ermittelt.

Das erste und zweite Signal werden einem Multiplikationsglied 1 zugeführt, an dessen Ausgang ein der Lenkleistung proportionales Signal P_{Lenk} erscheint.

Dieses Ausgangssignal wird einem Signum-Block 2 zugeführt, welcher das Vorzeichen des Ausgangssignals des Multiplikationsglieds 1 bestimmt.

Dem Signum-Block 2 ist eine Umschalteinrichtung 3 nachgeordnet, deren Ausgangsleitung 5 zu einem vorzugsweise nichtlinearen Filter 7 führt.

Eine erste Ausgangsleitung 9 des Signum-Blocks 2 führt unmittelbar zur Umschalteinrichtung 3, während eine zweite Ausgangsleitung 11 des Signum-Blocks zu dem Filter 7 geführt ist.

Ein erste Dämpfungswertgeber 13 ist über eine Leitung 15 mit der Umschalteinrichtung 3 verbunden. Ein zweiter Dämpfungswertgeber 17 steht über eine Leitung 19 mit der Umschalteinrichtung 3 in Verbindung.

Durch ein auf der Leitung 9 geführtes Signal wird die Umschalteinrichtung, abhängig vom Vorzeichen des lenkleistungsproportionalen Signals P_{Lenk}, umgeschaltet, so daß die Ausgangsleitung 5 der Umschalteinrichtung 3 in einer ersten Schaltstellung über die Leitung 15 mit dem ersten Dämpfungswertgeber 13 und in einer zweiten Schaltstellung über die Leitung 19 mit dem zweiten Dämpfungswertgeber 17 in Verbindung steht.

Beiden Dämpfungswertgebern 13 und 17 wird die Geschwindigkeit des Fahrzeugs v_{FZG} zugeführt. Das heißt also, daß die Dämpfungswerte in Abhängigkeit von der Fahrzeuggeschwindigkeit geändert werden können. Statt der Fahrzeuggeschwindigkeit können auch andere Betriebsparameter oder daraus berechnete Kenngrößen den Dämpfungswertgebern zugeführt werden.

Am Ausgang 21 des Filters 7 erscheint die Dämpfungskonstante d, die einem zweiten Multiplikationsglied 23 zugeführt wird. Als zweite Größe wird dem Multiplikationsglied das Signal ω_{LS} zugeführt, welches proportional zur Lenksäulen-Drehgeschwindigkeit ist. Dabei wird das Signal über einen Kennliniengeber 25 geleitet, der verschiedene Charakteristika (linear, progressiv, degressiv) enthalten kann. Beispielsweise kann das Signal ω_{LS} einer geschwindigkeits-linearen oder einer geschwindigkeits-quadratischen Kennlinie zugeführt werden.

Die Beeinflußung der Nichtlinearität des Filters 7 hängt von dem im Signum-Block 2 ermittelten Vorzeichen des lenkleistungsproportionalen Signals P_{Lenk} ab. Das Vorzeichen wird über die zweite Ausgangsleitung 11 des Signum-Blocks dem Filter 7 unmittelbar eingegeben. Durch dieses Filter wird die Schnelligkeit der Umschaltung zwischen den Dämpfungswertgebern 13 und 17 gezielt beeinflußt. Außerdem wird sichergestellt, daß die Umschaltung zwischen den Dämpfungswerten d₁ und d₂ der Dämpfungswertgeber stoßfrei erfolgt.

Das Ausgangssignal des zweiten Multiplizierers 23 wird über eine Leitung 27 einem Lenkkraft-Unterstützungsregler 29 eingegeben. Weitere Betriebsgrößen und Ist-Werte müssen ebenfalls dem Unterstützungsregler eingegeben werden. Dies ist beispielshaft durch einen Ist-Wert-Vektor 31 angedeutet. Das Ausgangssignal des Unterstützungsreglers 29 wird über eine Leitung 33 an eine Steuereinrichtung 35 weitergeleitet. Diese ist beispielsweise als Leistungselektronik ausgeführt und steuert ein Stellglied 37, das hydraulisch, pneumatisch und/oder elektrisch ausgelegt sein kann. Dieses Stellglied dient der Lenkunterstützung. Es ist daher in die Lenkmechanik des Lenksystems auf geeignete Weise eingebunden.

Aus der Darstellung ergibt sich, daß mit Hilfe des Lenkmoments m_{Lenk} und des Signals ω_{LS}, welches proportional zur Lenksäulendrehgeschwindigkeit ist, ein Signal P_{Lenk} erzeugt wird, welches proportional zum Leistungsfluß (P_{Lenk)} innerhalb des Lenksystems ist. Beispielsweise kann festgelegt werden, daß die Leistungsfluß positiv ist, sofern der Fahrer über das Lenkrad und die Lenkungsmechanik die Räder des Fahrzeugs bewegt. Der Leistungsfluß (P_{Lenk}) ist dagegen negativ, wenn durch die Rückstellkräfte die Räder über die Lenkungsmechanik das Lenkrad bewegen. Durch eine derartige Definition kann der Leistungsfluß innerhalb des Lenksystems bestimmt werden.

Die Richtung des Leistungflusses wird durch Ermittlung des Vorzeichens des leistungsflußproportionalen Signals P_{Lenk} im Signum-Block 2 durchgeführt. Je nach Richtung des Leistungsflusses wird über die Umschalteinrichtung 3 eine Dämpfungskennlinie ausgewählt. Dabei wird durch den ersten Dämpfungswertgeber 13 der Dämpfungswert d₁ und durch den zweiten Geber 17 der Dämpfungswert d₂ vorgegeben. Beide Dämpfungswerte sind hier von der Fahrzeuggeschwindigkeit V_{FZG} abhängig, das heißt, sie ändern sich mit der Fahrzeuggeschwindigkeit. Bei diesem Beispiel soll davon ausgegangen werden, daß die Wirkung der Rückstellkräfte innerhalb von definierbaren Fahrzeug-Geschwindigkeitsbereichen stark bedämpft wird, während vom Fahrer ausgeführte Lenkbewegungen schwach gedämpft zum Rad übertragen werden. Entsprechend werden die Dämpfungswerte d₁ und d₂ ausgewählt und von der Umschalteinrichtung 3 angesteuert. Die von der Umschalteinrichtung gewählten Dämpfungswerte werden dem nichtlinearen Filter 7 über die Leitung 5 eingegeben. Dabei ist hier die Nichtlinearität von dem Vorzeichen des Leistungsflusses abhängig, was durch die Leitung 11 angedeutet ist.

Durch das nichtlineare Filter wird die Schnelligkeit der Umschaltung zwischen der einen Dämpfungskennlinie und der anderen Dämpfungskennlinie in Abhängigkeit vom Leistungsfluß innerhalb des Lenksystems beeinflußt.

Treten während eines Lenkvorgangs Kraftstöße oder andere schnelle Änderungen der Rückstellkräfte derart auf, daß sich die Leistungsflußrichtung des Lenksystems ändert, so muß sehr schnell auf den für diesen Betriebsfall vorgesehenen Dämpfungswert umgeschaltet werden.

Soll auf den vom Fahrer eingeleiteten Lenkvorgang umgeschaltet werden, so sind wegen der geringeren maximalen Betätigungsgeschwindigkeit an den Schaltvorgang geringere Schnelligkeitsanforderungen zu stellen.

Überdies soll die Umschaltung der Dämpfung während einer Leistungsflußumkehrung stoßfrei erfolgen, damit keine störenden Einflüsse des Lenksystems bzw. der Servolenkung auf den Lenkvorgang auftreten.

Durch den Ist-Wert-Vektor 31 ist angedeutet, daß der Unterstützungsregler 29 verschiedene Ist-Werte, beispielsweise innerhalb des Lenksystems auftretende Kräfte und/oder Momente verarbeitet.

Das auf der Leitung 33 anliegende Ausgangssignal des Reglers 29 kann beispielsweise ein puls-weiten-moduliertes Signal sein, das einer Leistungselektronik zugeführt wird, die einen Elektromotor steuert. Durch den als Stellglied 37 wirkenden Motor können die Lenkkräfte in Abhängigkeit von dem am Ausgang des Filters 7 auftretenden Dämpfungswert d beeinflußt werden.

Für das Funktionsprinzip der leistungsflußrichtungsabhängigen Dämpfung ist es irrelevant, ob das Stellglied 37 die Lenkkräfte des Fahrers zum Zeitpunkt des Dämpfungsvorganges unterstützt oder nicht. Abgesehen von Vorgängen in der Regler- oder Stellgliedbegrenzung sind jederzeit Be- oder Entdämpfungsmaßnahmen möglich.

Für das beschriebene Verfahren ist die technische Ausgestaltung des Stellglieds gleichgültig. Es kann also hydraulisch, elektromechanisch und/oder pneumatisch realisiert sein.

Es ist möglich, verschiedene Betriebsparameter des Fahrzeugs bei der Beeinflussung der Dämpfung des Lenksystems heranzuziehen. Beispielsweise können hier die Fahrzeuggeschwindigkeit, der Beladungszustand, die Giergeschwindigkeit und/oder die -beschleunigung oder daraus rechnerisch ermittelte Kenngrößen berücksichtigt werden.

Schließlich ist es möglich, das beschriebene Verfahren so auszulengen, daß die Umschaltung der Dämpfungseigenschaften sehr schnell erfolgt, wenn das Lenksystem Stößen vom Untergrund ausgesetzt ist, wenn also plötzliche Bewegungen von den gelenkten Rädern auf die Lenkung übertragen werden. Bei einem umgekehrten Leistungsfluß, also einer Bewegung der gelenkten Räder durch die Bedienungsperson, kann die Umschaltung langsamer erfolgen. Eine derartige Beeinflussung der Dämpfung der Servolenkung wird durch eine entsprechende Wahl des Einschwenkverhaltens des Filters 7 erreicht.

Wird nun eine Zahnstangenlenkung mit einem derartigen Verfahren kombiniert, so wird die sogenannte Stößigkeit der Lenkung wesentlich verbessert. Es lassen sich daher Lenkeigenschaften erreichen, wie sie sonst nur mit Kugelumlauflenkungen zu erzielen sind.

## Patentansprüche

1. Verfahren zum Betrieb eines Lenksystems mit eines Servounterstützung, insbesondere zur Verwendung in einem Kraftfahrzeug, wobei das Lenksystem von dem Fahrer des Fahrzeugs und/oder von den durch die gelenkten Räder bewirkten Rückstellkräften betätigt wird und wobei dieser Zustand innerhalb des Lenksystems aus einem die am Lenksystem wirkenden Lenkkräfte und/oder Lenkmomente repräsentierenden Signal (m_{Lenk}) und einem die Lenksäulendrehgeschwindigkeit repräsentierenden Signal (w_{LS}) bestimmt wird, und Ansteuersignale (Ausgang 27) zur Betätigung der Servounterstützung (37) abhängig vom Zustand des Lenksystems und abhängig von dem die Lenksäulendrehgeschwindigkeit repräsentierenden Signal (w_{LS}) gebildet werden,
dadurch gekennzeichnet, daß
- der Zustand des Lenksystems aus dem Vorzeichen des Leistungsflußes (P_{Lenk}) innerhalb des Lenksystems bestimmt wird, wobei der Leistungsfluß (P_{Lenk}) aus dem die am Lenksystem wirkenden Lenkkräfte und/oder Lenkmomente repräsentierenden Signal (m_{Lenk}) und dem die Lenksäulendrehgeschwindigkeit repräsentierenden Signal (w_{LS}) ermittelt wird, und
- die lenksäulendrehgeschwindigkeitsabhängigen Ansteuersignale (Ausgang 27) je nach dem Vorzeichen (Ausgang 9) des Leistungsflußes (P_{Lenk}) unterschiedlich gedämpft werden.

2. Verfahren nach Anspruch 1, dadurch gekennzeichnet, daß zur unterschiedlichen Dämpfung der lenksäulendrehgeschwindigkeitsabhängigen Ansteuersignale (Ausgang 27) zwischen zwei Dämpfungswerten (d1, d2) oder zwei Dämpfungskennlinien (13, 17) abhängig von dem Vorzeichen (Ausgang 9) des Leistungsflußes (P_{Lenk}) umgeschaltet wird.

3. Verfahren nach Anspruch 2, dadurch gekennzeichnet, daß gemäß der Dämfungskennlinien (13,17) die Dämpfungswerte (d1, d2) abhängig von der Fahrzeuggeschwindigkeit (V_{FZG}) und/oder zur Beeinflussung der Dämpfung des Lenksystems den Beladungszustand, die Giergeschwindigkeit, die Gierbeschleunigung und/oder andere Betriebsparameter des Fahrzeugs herauzuziehen.

4. Verfahren nach Anspruch 2 oder 3, dadurch gekennzeichnet, daß die Umschaltungen in Reaktion auf Änderungen des Vorzeichens (Ausgang 9) des Leistungsflußes (P_{Lenk}) mit unterschiedlicher Schnelligkeit getätigt werden, wobei die Schnelligkeit abhängig von dem Vorzeichen (Ausgang 11) des Leistungsflußes (P_{Lenk}) ist.

5. Verfahren nach Anspruch 1, dadurch gekennzeichnet, daß der Leistungsfluß (P_{Lenk}) einen positiven Wert annimmt, wenn die Fahrer über das Lenksystem die Räder bewegt, und der Leistungsfluß (P_{Lenk}) einen negativen Wert annimmt, wenn die Rückstellkräfte der Räder das Lenksystem bewegen.

6. Verfahren nach Anspruch 4 und 5, dadurch gekennzeichnet, daß die Umschaltungen in Reaktion auf Änderungen des Vorzeichens (Ausgang 9) des Leistungsflußes (P_{Lenk}), bei denen sich das Vorzeichen des Leistungsflußes (P_{Lenk}) ausgehend von einem positiven Vorzeichen ändert, schneller getätigt werden als die Umschaltungen, bei denen sich das Vorzeichen des Leistungsflußes (P_{Lenk}) ausgehend von einem negativen Vorzeichen ändert.

7. Verfahren nach Anspruch 1 und 5, dadurch gekennzeichnet, daß die Dämpfung bei Vorliegen eines negativen Leistungsflußes (P_{Lenk}) größer ist als bei Vorliegen eines positiven Leistungsflußes (P_{Lenk}).

8. Lenksystem mit einer Servounterstützung für ein Kraftfahrzeug, bei dem
- Mittel (1, 2) vorgesehen sind, mittels der ein Zustand innerhalb des Lenksystems, ob das Lenksystem vom Fahrer oder von den durch die gelenkten Räder bewirkten Rückstellkräften bewirkt wird, aus einem den am Lenksystem wirkenden Lenkkräften und/oder Lenkmomenten repräsentierenden Signal (m_{Lenk}) und einem die Lenksäulendrehgeschwindigkeit repräsentierenden Signal (w_{LS}) bestimmt wird, und
- eine Steuereinrichtung (35) zur Steuerung eines Stellglieds (37) zur Lenkkraftunterstützung vorgesehen ist, die abhängig von dem Zustand (Ausgang 9) innerhalb des Lenksystems und abhängig von dem die Lenksäulendrehgeschwindigkeit repräsentierenden Signal (w_{LS}) Ansteuersignale für das Stellglied (37) bilden,
dadurch gekennzeichnet, daß
- die Mittel (1,2) den Zustand des Lenksystems aus dem Vorzeichen des Leistungsflußes (P_{Lenk}) innerhalb des Lenksystems bestimmen, wobei die Mittel (1,2) den Leistungsfluß (P_{Lenk}) aus dem die am Lenksystem wirkenden Lenkkräfte und/oder Lenkmomente repräsentierenden Signal (m_{Lenk}) und dem die Lenksäulendrehgeschwindigkeit repräsentierenden Signal (w_{LS}) ermitteln, und
- Dämpfungsmittel (1, 2, 13, 17, 3) vorgesehen sind, welche die lenksäulendrehgeschwindigkeitsabhängigen Ansteuersignale je nach dem Vorzeichen des Leistungsflußes (P_{Lenk}) unterschiedlich dämpfen.

9. Lenkvorrichtung nach Anspruch 8, gekennzeichnet dadurch, daß das Lenksystem eine Zahnstangenlenkung aufweist.

## Claims

1. Method for operating a steering system with power assistance, in particular for use in a motor vehicle, the steering system being actuated by the driver of the vehicle and/or by the reaction forces caused by the steered wheels and this condition within the steering system being determined from a signal (m_{Lenk}) representing the steering forces and/or steering moments acting on the steering system and a signal (w_{LS}) representing the angular velocity of the steering column, and triggering signals (output 27) for actuating the power assistance (37) as a function of the condition of the steering system and as a function of the signal (w_{LS}) representing the angular velocity of the steering column, characterised in that
- the condition of the steering system is determined from the sign of the power flow (P_{Lenk}) within the steering system, the power flow (P_{Lenk}) being determined from the signal (m_{Lenk}) representing the steering forces and/or steering moments acting on the steering system and the signal (w_{LS}) representing the angular velocity of the steering column, and in that
- the triggering signals dependent on the angular velocity of the steering column (output 27) are differently damped in accordance with the respective sign (output 9) of the power flow (P_{Lenk}).

2. Method according to Claim 1, characterised in that, for the different damping of the triggering signals (output 27) which depend on the angular velocity of the steering column, switch-over takes place between two damping values (d1, d2) or two damping characteristics (13, 17) as a function of the sign (output 9) of the power flow (P_{Lenk}).

3. Method according to Claim 2, characterised in that in accordance with the damping characteristics (13, 17), the damping values (d1, d2) are employed as a function of the vehicle speed (V_{FZG}) and/or - to influence the damping of the steering system - the loading condition, the yaw velocity, the yaw acceleration and/or other operating parameters of the vehicle.

4. Method according to Claim 2 or 3, characterised in that the switch-over operations in reaction to changes in the sign (output 9) of the power flow (P_{Lenk}) are actuated at different rapidity, the rapidity depending on the sign (output 11) of the power flow (P_{Lenk}).

5. Method according to Claim 1, characterised in that the power flow (P_{Lenk}) takes on a positive value when the driver moves the wheels by means of the steering system and the power flow (P_{Lenk}) takes on a negative value when the reaction forces of the wheels move the steering system.

6. Method according to Claims 4 and 5, characterised in that the switch-over operations in reaction to changes in the sign (output 9) of the power flow (P_{Lenk}) in which the sign of the power flow (P_{Lenk}) changes from a positive sign are actuated more rapidly than the switch-over operations in which the sign of the power flow (P_{Lenk}) changes from a negative sign.

7. Method according to Claims 1 and 5, characterised in that the damping is larger in the presence of a negative power flow (P_{Lenk}) than it is in the presence of a positive power flow (P_{Lenk}).

8. Steering system with power assistance for a motor vehicle in which
- means (1, 2) are provided by means of which a condition within the steering system, whether the steering system is being actuated by the driver or by the return forces caused by the steered wheels, is determined from a signal (m_{Lenk}) representing the steering forces and/or steering moments acting on the steering system and a signal (w_{LS}) representing the angular velocity of the steering column, and
- a control device (35) for controlling an actuator (37) for steering force assistance is provided which forms triggering signals for the actuator (37) as a function of the condition (output 9) and as a function of the signal (w_{LS}) representing the angular velocity of the steering column,
characterised in that
- the means (1, 2) determine the condition of the steering system from the sign of the power flow (P_{Lenk}) within the steering system, the means (1, 2) determining the power flow (P_{Lenk}) from the signal (m_{Lenk}) representing the steering forces and/or steering moments acting on the steering system and the signal (w_{LS}) representing the angular velocity of the steering column, and
- damping means (1, 2, 13, 17, 3) are provided which damp the triggering signals dependent on the angular velocity of the steering column differently in accordance with the sign of the power flow (P_{Lenk}).

9. Steering appliance according to Claim 8, characterised in that the steering system has rack-and-pinion steering.

## Revendications

1. Procédé de commande d'une direction assistée, notamment destinée à un véhicule automobile, la direction assistée étant commandée par le conducteur du véhicule et/ou par les forces de rappel exercées par les roues directionnelles, et on détermine cet état de la direction à partir d'un signal (m_{dir}) représentant les forces et/ou les couples de direction agissant sur la direction et d'un signal (w_{LS}) représentant la vitesse de rotation de la colonne de direction et on forme des signaux de commande (sortie 27) pour commander le moyen d'assistance (37) en fonction de l'état de la direction et en fonction du signal (w_{LS}) représentant la vitesse de rotation de la colonne de direction, procédé caractérisé en ce que :
- l'état de la direction est déterminé à partir du signe algébrique du flux de puissance (P_{dir}) dans la direction, le flux de puissance (P_{dir}) étant obtenu à partir du signal (m_{dir}) représentant les forces de direction agissant sur la direction et/ou les couples de direction et du signal (w_{LS}) représentant la vitesse de rotation de la colonne de direction et
- les signaux de commande (sortie 27) dépendant de la vitesse de rotation de la colonne de direction, sont amortis différemment suivant le signe algébrique (sortie 9) du flux de puissance (P_{dir}).

2. Procédé selon la revendication 1, caractérisé en ce que pour amortir différemment les signaux de commande (sortie 27) dépendant de la vitesse de rotation de la colonne de direction, on commute entre deux valeurs d'amortissement (d1, d2) ou deux caractéristiques d'amortissement (13, 17), en fonction du signe algébrique (sortie 9) du flux de puissance (P_{dir}).

3. Procédé selon la revendication 2, caractérisé en ce que selon les courbes caractéristiques d'amortissement (13, 17) on extrait les valeurs d'amortissement (d1, d2) en fonction de la vitesse du véhicule (V_{FZG}) et/ou pour influencer l'amortissement de la direction, de l'état de charge, de la vitesse de giration, de l'accélération de giration et/ou des autres paramètres de fonctionnement du véhicule.

4. Procédé selon la revendication 2 ou 3, caractérisé en ce que les commutations se font avec une vitesse différente en réaction aux variations du signe algébrique (sortie 9) du flux de puissance (P_{dir}), la vitesse dépendant du signe algébrique (sortie 11) du flux de puissance (P_{dir}).

5. Procédé selon la revendication 1, caractérisé en ce que le flux de puissance (P_{dir}) prend une valeur positive lorsque le conducteur bouge les roues par la direction et le flux de puissance (P_{dir}) prend une valeur négative lorsque les forces de rappel des roues déplacent la direction.

6. Procédé selon les revendications 4 et 5, caractérisé en ce que les commutations en réaction aux variations du signe algébrique (sortie 9) du flux de puissance (P_{dir}) pour lesquelles le signe algébrique du flux de puissance (P_{dir}) change en partant d'un signe positif sont plus rapides que les commutations pour lesquelles le signe algébrique du flux de puissance (P_{dir}) change à partir d'un signe algébrique négatif.

7. Procédé selon les revendications 1 et 5, caractérisé en ce qu'en présence d'un flux négatif de puissance (P_{dir}) l'amortissement est plus grand qu'en présence d'un flux positif de puissance (P_{dir}).

8. Direction assistée pour véhicule automobile comprenant :
- des moyens (1, 2) qui permettent de déterminer un état de la direction, c'est-à-dire si la direction est actionnée par le conducteur ou par les forces de rappel exercées par les 'roues directrices, en partant d'un signal (m_{dir}) représentant les forces et/ou le couple de guidage agissant sur la direction et d'un signal (w_{LS}) représentant la vitesse de rotation de la colonne de direction et
- une installation de commande (35) pour commander un organe de réglage (37) assistant la force de guidage, cette installation formant des signaux de commande pour l'organe de réglage (37) en fonction de l'état (sortie 9) de la direction ainsi que de la vitesse de rotation de la colonne de direction,
direction assistée caractérisée en ce que :
- les moyens (1, 2) déterminent l'état de la direction à partir du signe algébrique du flux de puissance (P_{dir}) dans la direction, les moyens (1, 2) déterminant le flux de puissance (P_{dir}) à partir du signal (m_{dir}) représentant les forces et/ou couples de guidage de la direction et du signal (w_{LS}) représentant la vitesse de rotation de la colonne de direction et
- des moyens d'amortissement (1, 2, 13, 17, 3) qui amortissent différemment les signaux de commande dépendant de la vitesse de rotation de la colonne de direction suivant le signe algébrique du flux de puissance (P_{dir}).

9. Direction assistée selon la revendication 8, caractérisée en ce que la direction comporte une direction à crémaillère.
